# EUROPÄISCHE PATENTSCHRIFT

(11) **EP 3 681 759 B1**
(45) Veröffentlichungstag und Bekanntmachung des Hinweises auf die Patenterteilung: **01.09.2021**
(21) Anmeldenummer: 18768870.0
(22) Anmeldetag: 11.09.2018
(51) Int. Cl.: B60N 2/04, B60N 2/06, B60N 2/14, B60N 3/06, B60N 2/885, B60Q 3/233, B60N 2/879, B60N 2/865, B60N 2/02

(54) **KOPFSTÜTZE FÜR EINE SITZLEHNE EINES FAHRZEUGSITZES UND FAHRZEUGSITZ**
HEAD RESTRAINT FOR A SEAT BACK OF A VEHICLE SEAT AND VEHICLE SEAT
APPUI-TÊTE POUR UN DOSSIER DE SIÈGE D'UN SIÈGE E VÉHICULE ET SIÈGE DE VÉHICULE

(30) Priorität: 12.09.2017 DE 102017216116
(43) Veröffentlichungstag der Anmeldung: 22.07.2020
(73) Patentinhaber: Adient Engineering and IP GmbH, 51399 Burscheid (DE)
(72) Erfinder: GUNKEL, Thomas, 40885 Ratingen (DE); HEMMELRATH, Rudolf Wilhelm, 51377 Leverkusen (DE); FINNEGAN, Laurence, 40545 Düsseldorf (DE); SCHMITZ, Andreas, 51399 Burscheid (DE); FROTZ, Thomas, 42929 Wermelskirchen (DE); BAHR, Daniel, 51515 Kürten (DE); SINGH, Kaushal Kumar, Moradabad Uttar Pradesh 244302 (IN)
(74) Vertreter: Liedtke & Partner Patentanwälte
(86) Internationale Anmeldenummer: PCT/EP2018/074370
(87) Internationale Veröffentlichungsnummer: WO 2019/052976

(56) Entgegenhaltungen:
- EP-A1- 2 923 886
- EP-A2- 1 449 713
- DE-A1- 10 241 132
- DE-A1-102008 061 168
- US-A1- 2011 227 387

## Beschreibung

Die Erfindung betrifft eine Kopfstütze für eine Sitzlehne eines Fahrzeugsitzes sowie einen Fahrzeugsitz.

Im Stand der Technik sind aus WO 2018/034903 A1, WO 2017/160594 A1 und US 2017/0224117 A Kopfstützen für Fahrzeugsitze bekannt.

Aus DE 10 2008 061 168 A1 ist eine Kopfstütze mit zwei beweglichen Seitenteilen bekannt.

Aus DE 102 41 132 A1 ist eine regulierbare Kopfstütze mit verstellbaren, seitlichen Kopfablagen bekannt.

Aus EP 1 449 713 A2 ist eine Kopfstütze mit verschiebbarem Kopfauflageteil und Komfortflügeln bekannt.

Aus EP 2 923 886 A1 ist eine Kopfstütze für einen Fahrzeugsitz bekannt, der ein Mittelteil und wenigstens einen Seitenflügel umfasst.

Aus US 2011 / 227387 A1 ist eine Kopfstütze für ein Fahrzeug bekannt, wobei die Kopfstütze eine erste Oberfläche und eine zweite Oberfläche umfasst.

Die Aufgabe der vorliegenden Erfindung ist es, eine verbesserte Kopfstütze für eine Sitzlehne eines Fahrzeugsitzes sowie einen verbesserten Fahrzeugsitz anzugeben.

Die Aufgabe wird die Kopfstütze betreffend erfindungsgemäß mit einer Kopfstütze für Fahrzeugsitze mit den in Anspruch 1 angegebenen Merkmalen gelöst.

Den Fahrzeugsitz betreffend wird die Aufgabe erfindungsgemäß mit den in Anspruch 3 angegebenen Merkmalen gelöst.

Die Kopfstütze ist besonders für Fahrzeugsitze, insbesondere für Fahrersitze, geeignet, die in einer Komfort-Position oder in einer Fahrposition positionierbar sind, wobei eine Sitzlehne des Fahrzeugsitzes von der Komfort-Position in die Fahrposition bringbar ist und umgekehrt. Eine Komfort-Position ist beispielsweise eine während eines Fahrzustandes eines autonom fahrenden Fahrzeugs eingenommene liegende Position der Sitzlehne, eine Fahrposition des Fahrzeugsitzes ist eine üblicherweise beim Fahrbetrieb eines Menschen eingenommene weitgehend aufrechte Position der Sitzlehne.

Eine Kopfstütze für eine Sitzlehne eines Fahrzeugsitzes weist zwei seitliche, also seitlich ausladende Flügel auf. Erfindungsgemäß verläuft eine oberseitige Oberfläche der Flügel mit zunehmender Ausladung in einer Fahrposition, also in einer aufrechten Position der Kopfstütze und damit in einer aufrechten Position der Sitzlehne, von oben nach unten.

Dadurch weist die Kopfstütze eine Form auf, die den zu erwartenden Bedürfnissen einen Sitzkomfort in autonom fahrenden Fahrzeugen betreffend gerecht wird. Die Form der seitlichen Flügel ermöglicht eine seitliche Unterstützung eines Kopfes einer Person. Dabei ermöglicht die Form der seitlichen Flügel der Kopfstütze zwar eine seitliche Unterstützung des Kopfes, dabei ist jedoch eine periphere Sicht der Person, insbesondere wenn diese das Fahrzeug, in welchem die Kopfstütze angeordnet ist, führt, nicht beeinträchtigt.

Die erfindungsgemäße Kopfstütze sieht eine Anzahl von Leseleuchten vor. Dies ist besonders vorteilhaft, da ein von den Leseleuchten gesendetes Licht besonders gut derart ausrichtbar oder ausgerichtet ist, dass beispielsweise ein Buch, das eine die Kopfstütze nutzende Person liest, besonders zielgenau beleuchtbar oder beleuchtet ist, da die Position des von der Person gehaltenen Buches in aller Regel mit der Position des Kopfes dieser Person korrespondiert und die Position des Kopfes mit der Position der Kopfstütze korrespondiert. Zudem sind üblicherweise in einem Fahrzeughimmel angeordnete Leseleuchten entbehrlich, was baulich einfacher und ästhetisch anspruchsvoller ist. Besonders vorteilhaft ist, dass bei einer Änderung der Position des Kopfes im Fahrzeug, die mit einer Verstellung der Position der Kopfstütze im Fahrzeug korrespondiert, das Leselicht stets an die gewünschte Stelle gesendet wird, ohne dass die Leuchtrichtung gesondert eingestellt werden muss. Dies ist insbesondere auch der Fall, wenn die Sitzlehne verstellt oder sogar wenn der gesamte Fahrzeugsitz um eine vertikale Achse gedreht wird. Durch die genaue Ausrichtung ist ein Leselicht besonders gut ausrichtbar und damit ist die Leseleuchte besonders energiesparend, wodurch eine Emission von Kohlendioxid reduzierbar ist. Zudem werden andere Fahrzeuginsassen dadurch weniger geblendet als bei der Verwendung herkömmlicher Kopfstützen und separater Leseleuchten.

Erfindungsgemäß sind dabei die Leseleuchten in die seitlichen Flügel integriert. Dadurch sind diese geschützt, optisch kaum erkennbar und damit als ästhetisch empfunden sowie in ihrer Beleuchtungsrichtung besonders sicher mit der Position der Kopfstütze gekoppelt.

Erfindungsgemäß sind die Leseleuchten unterseitig in die seitlichen Flügel integriert. Dadurch ist auf baulich einfache Weise eine gute Ausrichtung des von den Leseleuchten ausgesendeten Lichts auf ein zu beleuchtendes Objekt möglich.

Die erfindungsgemäße Kopfstütze sieht eine Anzahl von Lautsprechern vor. Dadurch ist eine gerichtete, sitz- und damit personenindividuelle Beschallung möglich, ohne dass eine gegebenenfalls als unangenehm empfundene Verwendung eines Kopfhörers erforderlich ist und wobei andere Fahrzeuginsassen weniger durch die Beschallung gestört werden, als wenn das gesamte Fahrzeug innen ungerichtet beschallt wird.

Erfindungsgemäß sind dabei die Lautsprecher in die seitlichen Flügel integriert. Eine Beschallung ist damit besonders zielgerichtet möglich, da sich die Flügel in unmittelbarer Nähe von zu beschallenden Ohren befinden. Dadurch sind die Lautsprecher leistungsarm und damit klein und platzsparend ausbildbar.

Erfindungsgemäß sind die Lautsprecher unterseitig in die seitlichen Flügel integriert, beispielsweise mit einer gemeinsamen Einheit, die sowohl Lautsprecher als auch Leseleuchten umfasst. Dadurch, dass die Lautsprecher und/oder die Leseleuchten unterseitig in die seitlichen Flügel integriert sind, sind sie optisch kaum erkennbar, wodurch ein ästhetischer Eindruck erzielbar ist.

Die erfindungsgemäße Kopfstütze sieht eine Anzahl von Mikrofonen vor. Dadurch ist eine gerichtete, sitz- und damit personenindividuelle Spracheingabe, beispielsweise zum Telefonieren oder zur Bedienung einer Vorrichtung oder des Fahrzeugs, möglich, wobei andere Fahrzeuginsassen weniger durch die Spracheingabe gestört werden, als wenn weiter entfernt angeordnete Mikrofone verwendet werden würden.

Ein Fahrzeugsitz weist eine Sitzlehne auf. Erfindungsgemäß ist eine oben beschriebene Kopfstütze vorgesehen. Der Fahrzeugsitz weist die vorgenannten Vorteile auf, insbesondere kann eine Person, die auf dem Fahrzeugsitz sitzt, ein Objekt stets zielgenau beleuchten und sich zielgenau beschallen lassen, auch wenn der Fahrzeugsitz verstellt wird, beispielsweise eine Neigung der Sitzlehne oder eine Positionierung der Kopfstütze geändert wird oder wenn der gesamte Fahrzeugsitz um eine vertikale Ache gedreht wird, beispielsweise wenn eine Komfort-Position oder eine Fahrposition eingenommen wird.

Eine Ausgestaltung des erfindungsgemäßen Fahrzeugsitzes sieht ein Verbindungselement zur Verbindung der Kopfstütze mit der Sitzlehne vor. Dabei ist das Verbindungselement zumindest Teil eines Verstellmechanismus zum Verstellen der Kopfstütze. Das Verbindungselement ist gegenüber der Sitzlehne in Z-Richtung verschiebbar und um eine horizontale Achse schwenkbar. Dadurch ist die Kopfstütze einfach und wirkungsvoll verstellbar.

Bevorzugt ist vorgesehen, dass die Kopfstütze gegenüber dem Verbindungselement zumindest anteilig in einer X-Richtung, also in Fahrzeuglängsrichtung, linear oder zumindest annähernd linear verschiebbar ist. Dadurch ist die Kopfstütze besonders gut in sehr verschiedene, jeweils gewünschte Positionen bringbar.

Dabei sind besonders bevorzugt die Verschiebung in Z-Richtung, die Verdrehung und die Verschiebung in X-Richtung gleichzeitig vornehmbar, wodurch die Verstellung besonders zügig erfolgen kann.

Eine weitere Ausgestaltung des erfindungsgemäßen Fahrzeugsitzes sieht eine Verdrehbarkeit des Fahrzeugsitzes gegenüber einem Fahrzeugboden um eine Hochachse vor. Dadurch ist der Fahrzeugsitz einfach von einer Komfort-Position in eine Fahrposition und umgekehrt bringbar.

Gemäß einer weiteren Ausgestaltung des erfindungsgemäßen Fahrzeugsitzes ist vorgesehen, dass die Verschiebbarkeit in Z-Richtung zwischen 60 mm und 80 mm, insbesondere zwischen 65 mm und 75 mm, beträgt und/oder die Verdrehbarkeit um die horizontale Achse zwischen 5° und 9°, insbesondere zwischen 6° und 8°, beträgt und/oder die Verschiebbarkeit in X-Richtung zwischen 20 mm und 40 mm, insbesondere zwischen 25 mm und 35 mm beträgt. Dadurch ist die Kopfstütze besonders gut in sehr verschiedene, jeweils gewünschte Positionen bringbar und der Fahrzeugsitz damit besonders komfortabel.

Gemäß einer weiteren Ausgestaltung des erfindungsgemäßen Fahrzeugsitzes ist ein sogenanntes Spine-Design vorgesehen, wobei das Verbindungselement eine einzige, also nicht zergliederte, Verkleidung umfasst, die ein- oder mehrteilig sein kann. Die einzige Verkleidung hat gegenüber einer herkömmlichen Verbindung zwischen Sitzlehne und Fahrzeugsitz mittels zweier Stangen ein sehr ansprechendes optisches Erscheinungsbild.

Die Ausführungsbeispiele der Erfindungen werden anhand von Zeichnungen näher erläutert. Dabei zeigen:
- Figur 1: eine Ausführungsform einer erfindungsgemäßen Kopfstütze in perspektivischer Ansicht,
- Figur 2: eine zugehörige weitere perspektivische Ansicht,
- Figur 3: eine zugehörige weitere perspektivische Ansicht, und
- Fig. 4a bis 4c: zugehörige weitere perspektivische Ansichten.

Einander entsprechende Teile sind in allen Figuren mit den gleichen Bezugszeichen versehen.

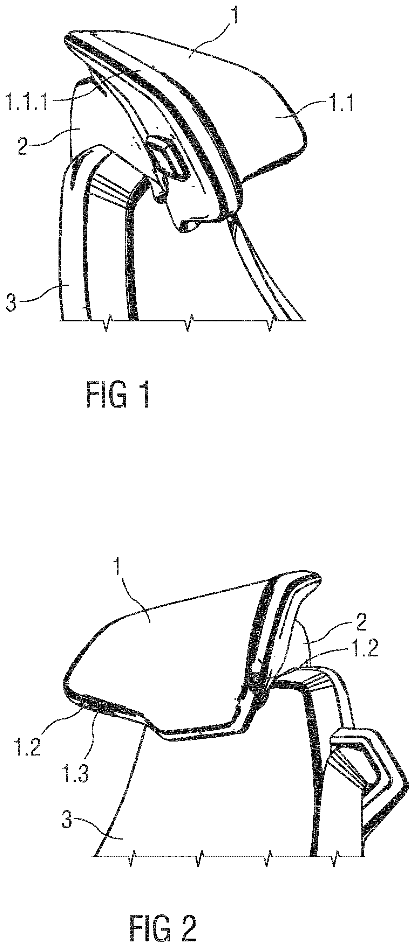

**Figuren 1 bis 3** **und** **4a, 4b und 4c** zeigen eine erfindungsgemäße Kopfstütze 1. Die Kopfstütze 1 weist eine Form auf, die den zu erwartenden Bedürfnissen einen Sitzkomfort in autonom fahrenden Fahrzeugen betreffend gerecht wird. Die Form seitlicher Flügel 1.1 ist so ausgebildet, dass eine seitliche Unterstützung eines Kopfes einer Person möglich ist. Dabei sind die seitlichen Flügel 1.1 der Kopfstütze 1 so geformt, dass zwar eine seitliche Unterstützung des Kopfes ermöglicht ist, dass aber eine periphere Sicht der Person, insbesondere wenn diese das Fahrzeug, in welchem die Kopfstütze angeordnet ist, führt, nicht beeinträchtigt ist.

Die Kopfstütze 1 für die Sitzlehne 3 des Fahrzeugsitzes weist zwei seitliche, also seitlich ausladende, Flügel 1.1 auf. Dabei verläuft eine oberseitige Oberfläche 1.1.1 der Flügel 1.1 mit zunehmender Ausladung in einer Fahrposition, also in einer aufrechten Position der Kopfstütze 1 und damit in einer aufrechten Position der Sitzlehne 3, von oben nach unten. Die Oberfläche 1.1.1 der Flügel 1.1 fällt also von innen nach außen ab, und zwar in einem oberen Bereich, also im Bereich geringerer Ausladung, weniger stark als in einem unteren Bereich, also im Bereich größeren Ausladung.

In der Kopfstütze 1 sind zwei Leseleuchten 1.2 und ein Lautsprechersystem mit zwei Lautsprechern 1.3 integriert. Die Leseleuchten 1.2, die Lautsprecher 1.3 des Lautsprechersystems sowie ein optionales Mikrofon sind dabei stets perfekt positioniert, insbesondere unabhängig von einer Stellung der Kopfstütze 1 zur Sitzlehne 3 des Fahrzeugsitzes und unabhängig von einer Stellung des Fahrzeugsitzes im Fahrzeug, beispielsweise auch bei einer tief abgeklappten Sitzlehne 3 oder bei einem um 180° um die Hochachse gedrehten Fahrzeugsitz. Die Kopfstütze 1 erlaubt eine Verbesserung eines Verstellbereichs, um eine Unterstützung des Kopfes der Person auch in einer tief zurückgelehnten Position zu ermöglichen. Gleichzeitig werden die sich aus räumlichen Beschränkungen ergebenden Erfordernisse berücksichtigt, indem ein schlanker Verstellmechanismus verwendet wird, der zumindest anteilig in einem Verbindungselement 2 angeordnet ist.

In jedem seitlichen Flügel 1.1 sind jeweils eine Leseleuchte 1.2 und ein Lautsprecher 1.3 in einer gemeinsamen Einheit angeordnet.

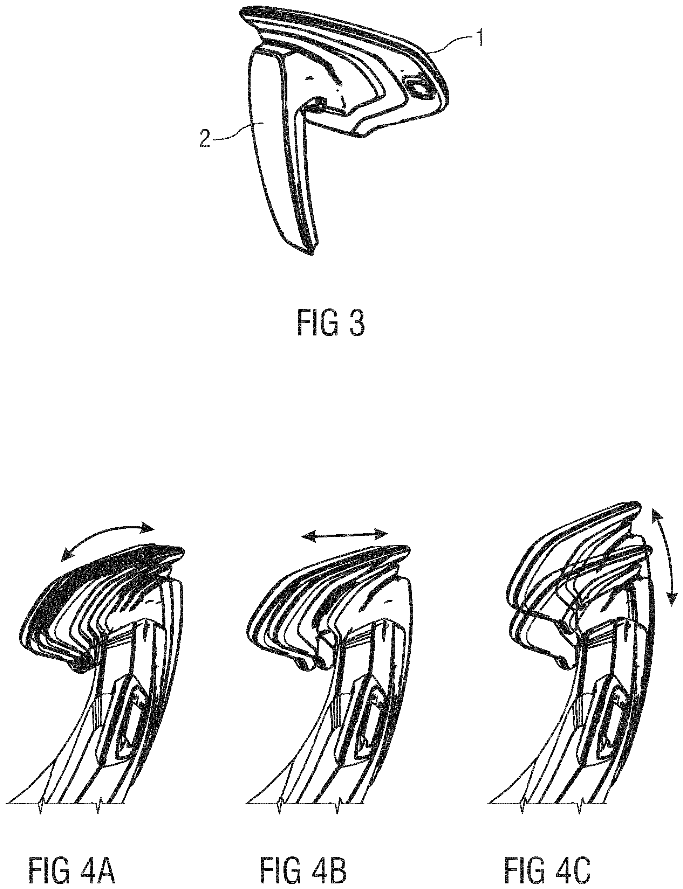

Eine in den **Figuren 4a und 4b** gezeigte Verstellung der Kopfstütze 1 in X-Richtung ist ermöglicht durch eine insbesondere elektrisch angetriebene Verstellung der Kopfstütze 1, wobei eine Verstellung in X-Richtung um 30 mm durch Verdrehung der Kopfstütze um 7° kombinierbar ist mit einer zusätzlichen Verschiebung um 30 mm in X-Richtung als lineare Verschiebung.

Ein in **Figur 4c** erläuterter Verstellmechanismus für eine Verstellung der Kopfstütze 1 in Z-Richtung nutzt einen Raum im oberen Bereich der Sitzlehne 3, welcher die Kopfstütze 1 zugeordnet ist. Die Anordnung des Verstellmechanismus für die Verstellung in Z-Richtung im oberen Bereich der Sitzlehne 3 erlaubt eine größere gestalterische Freiheit, insbesondere ein so genanntes Spine-Design anstelle zweier einfacher herkömmlicher Stangen, deren Erscheinungsbild als überholt angesehen werden könnte. Die Kopfstütze ist in der Höhe, also in Z-Richtung, um 70 mm verstellbar.

### Bezugszeichenliste

- 1: Kopfstütze
- 1.1: seitliche Flügel
- 1.1.1: oberseitige Oberfläche
- 1.2: Leseleuchte
- 1.3: Lautsprecher
- 2: Verbindungselement
- 3: Sitzlehne

## Patentansprüche

1. Kopfstütze (1) für eine Sitzlehne (3) eines Fahrzeugsitzes, aufweisend zwei seitliche Flügel (1.1),
wobei eine oberseitige Oberfläche (1.1.1) der Flügel (1.1) mit zunehmender Ausladung in einer Fahrposition von oben nach unten verläuft,
wobei Leseleuchten (1.2) in die seitlichen Flügel (1.1) integriert sind und
wobei Lautsprecher (1.3) und/oder Mikrofone in die seitlichen Flügel (1.1) integriert sind
wobei die Leseleuchten (1.2) unterseitig in die seitlichen Flügel (1.1) integriert sind, wobei die Lautsprecher (1.3)
und/oder die Mikrofone unterseitig in die seitlichen Flügel (1.1) integriert sind und wobei die Kopfstütze (1) einschließlich der zwei seitlichen Flügel (1.1) eine durchgängige Kopfanlagefläche aufweist.

2. Fahrzeugsitz, aufweisend eine Sitzlehne (3), **gekennzeichnet durch** eine Kopfstütze (1) nach einem der vorhergehenden Ansprüche.

3. Fahrzeugsitz nach Anspruch 2, **gekennzeichnet durch** ein Verbindungselement (2) zur Verbindung der Kopfstütze (1) mit der Sitzlehne (3), wobei das Verbindungselement (2) zumindest Teil eines Verstellmechanismus ist und wobei das Verbindungselement (2) gegenüber der Sitzlehne (3) in Z-Richtung verschiebbar und um eine horizontale Achse schwenkbar ist.

4. Fahrzeugsitz nach Anspruch 2 oder 3, **dadurch gekennzeichnet, dass** die Kopfstütze (1) gegenüber dem Verbindungselement (2) zumindest anteilig in einer X-Richtung linear verschiebbar ist.

5. Fahrzeugsitz nach Anspruch 4, **dadurch gekennzeichnet, dass** die Verschiebung in Z-Richtung, die Verdrehung und die Verschiebung in X-Richtung gleichzeitig vornehmbar sind.

6. Fahrzeugsitz nach einem der Ansprüche 2-5, **gekennzeichnet durch** eine Verdrehbarkeit um eine Hochachse.

7. Fahrzeugsitz nach einem der Ansprüche 3-6, **dadurch gekennzeichnet, dass**
- die Verschiebbarkeit in Z-Richtung zwischen 60 mm und 80 mm beträgt und/oder
- die Verdrehbarkeit um die horizontale Achse zwischen 5° und 9° beträgt und/oder
- die Verschiebbarkeit in X-Richtung zwischen 20 mm und 40 mm beträgt.

## Claims

1. Head restraint (1) for a seat back (3) of a vehicle seat, having two lateral wings (1.1),
wherein, in a driving position, an upper surface (1.1.1) of the wings (1.1) runs with an increasing projection from top to bottom,
wherein reading lights (1.2) are integrated in the lateral wings (1.1) and
wherein loudspeakers (1.3) and/or microphones are integrated in the lateral wings (1.1),
wherein the reading lights (1.2) are integrated in the bottom side of the lateral wings (1.1),
wherein the loudspeakers (1.3) and/or the microphones are integrated in the bottom side of the lateral wings (1.1) and
wherein the head restraint (1) including the two lateral wings (1.1) has a continuous head contact surface.

2. Vehicle seat, having a seat back (3), **characterized by** a head restraint (1) according to one of the preceding claims.

3. Vehicle seat according to Claim 2, **characterized by** a connecting element (2) for connecting the head restraint (1) to the seat back (3), wherein the connecting element (2) is at least part of an adjustment mechanism and wherein the connecting element (2) is displaceable with respect to the seat back (3) in a z direction and pivotable about a horizontal axis.

4. Vehicle seat according to Claim 2 or 3, **characterized in that** the head restraint (1) is linearly displaceable with respect to the connecting element (2) at least in part in an x direction.

5. Vehicle seat according to Claim 4,
**characterized in that** the displacement in the z direction, the rotation and the displacement in the x direction are performable simultaneously.

6. Vehicle seat according to one of Claims 2-5, **characterized by** a rotatability about a vertical axis.

7. Vehicle seat according to one of Claims 3-6, **characterized in that**
- the displaceability in the z direction amounts to between 60 mm and 80 mm and/or
- the rotatability about the horizontal axis amounts to between 5° and 9° and/or
- the displaceability in the x direction amounts to between 20 mm and 40 mm.

## Revendications

1. Appui-tête (1) pour un dossier de siège (3) d'un siège de véhicule, présentant
deux oreilles latérales (1.1),
une surface côté supérieure (1.1.1) des oreilles (1.1) s'étendant avec une saillie augmentant du haut vers le bas dans une position de déplacement,
des lampes de lecture (1.2) étant intégrées dans les oreilles latérales (1.1), et
des haut-parleurs (1.3) et/ou des microphones étant intégrés dans les oreilles latérales (1.1),
les lampes de lecture (1.2) étant intégrées dans les oreilles latérales (1.1) sur la face inférieure, les haut-parleurs (1.3) et/ou les microphones étant intégrés dans les oreilles latérales (1.1) sur la face inférieure, et
l'appui-tête (1) présentant une surface d'appui de tête continue incluant les deux oreilles latérales (1.1).

2. Siège de véhicule, présentant un dossier de siège (3), **caractérisé par** un appui-tête (1) selon l'une quelconque des revendications précédentes.

3. Siège de véhicule selon la revendication 2, **caractérisé par** un élément de liaison (2) permettant de relier l'appui-tête (1) au dossier de siège (3), l'élément de liaison (2) faisant au moins partie d'un mécanisme de réglage, et l'élément de liaison (2) étant coulissant dans une direction Z par rapport au dossier de siège (3) et pivotant autour d'un axe horizontal.

4. Siège de véhicule selon la revendication 2 ou 3, **caractérisé en ce que** l'appui-tête (1) est coulissant de façon linéaire par rapport à l'élément de liaison (2) au moins proportionnellement dans une direction X.

5. Siège de véhicule selon la revendication 4, **caractérisé en ce que** le coulissement dans la direction Z, la rotation et le coulissement dans la direction X peuvent être réalisés en même temps.

6. Siège de véhicule selon l'une quelconque des revendications 2 à 5, **caractérisé par** une possibilité de rotation autour d'un axe vertical.

7. Siège de véhicule selon l'une quelconque des revendications 3 à 6, **caractérisé en ce que**
- la possibilité de coulissement dans la direction Z est comprise entre 60 mm et 80 mm, et/ou
- la possibilité de rotation autour de l'axe horizontal est comprise entre 5° et 9°, et/ou
- la possibilité de coulissement dans la direction X est comprise entre 20 mm et 40 mm.
